Europäisches Patentamt

**European Patent Office**

Office européen des brevets

(11) Publication number: **0 339 848**
A1

## EUROPEAN PATENT APPLICATION

(21) Application number: **89303776.2**

(22) Date of filing: **17.04.89**

(51) Int. Cl.⁴: **C08G 18/28 , C08G 18/66 , C08G 18/14**

(30) Priority: **25.04.88 GB 8809754**

(43) Date of publication of application:
**02.11.89 Bulletin 89/44**

(84) Designated Contracting States:
**AT BE CH DE ES FR GB GR IT LI NL SE**

(71) Applicant: **IMPERIAL CHEMICAL INDUSTRIES PLC**
**Imperial Chemical House Millbank**
**London SW1P 3JF(GB)**

(72) Inventor: **Carroll, William Graham**
**9 Sunnymede Vale Holcombe Brook**
**Bury Lancashire(GB)**

(74) Representative: **Baken, Philippus Johannes L. H. et al**
**Imperial Chemical Industries PLC Legal Department: Patents P.O. Box 6 Bessemer Road**
**Welwyn Garden City Herts. AL7 1HD(GB)**

(54) **Process for making polyurethane foams.**

(57) A method for the preparation of open-celled hydrophilic polyurethane foam which comprises reacting a liquid MDI composition with a polyol component comprising :

1) an oxyalkylation product of ethylene diamine having a hydroxyl number of from 600 to 850;
2) a polyoxyalkylene triol having a hydroxyl number of from 28 to 56, and
3) a polyethylene glycol monoalkyl ether having a molecular weight of from 300 to 1000,

and a blowing agent comprising water and optionally a low boiling point halogenated hydrocarbon, the weight of polyethylene glycol monoalkyl ether being at least four times the weight of water and the isocyanate index being in the range from 25 to 90.

EP 0 339 848 A1

This invention relates to polyurethane foams and more particularly to a method for the preparation of polyurethane foams of improved hydrophilicity.

The use of polyurethane foam as a propagating medium for plant cuttings or as a support for cut flowers is well-established. Because polyurethane foam, in general, is a relatively hydrophobic material which does not readily retain the amount of water required for these purposes, formulation changes designed to produce more hydrophilic foams are necessary.

The present invention provides a method for the preparation of open-celled hydrophilic polyurethane foam which comprises reacting a liquid MDI composition with a polyol component comprising :

1) an oxyalkylation product of ethylene diamine having a hydroxyl number of from 600 to 850;

2) a polyoxyalkylene triol having a hydroxyl number of from 28 to 56, and

3) a polyethylene glycol monoalkyl ether having a molecular weight of from 300 to 1000,

and a blowing agent comprising water and optionally a low boiling point halogenated hydrocarbon, the weight of polyethylene glycol monoalkyl ether being at least four times the weight of water and the isocyanate index being in the range from 25 to 90.

The liquid MDI used in the process of the invention may be a polymeric or "crude" MDI comprising a mixture of diphenylmethane diisocyanates and higher functionality polymethylene polyphenyl polyisocyanates obtained by the phosgenation of the crude polyamine mixtures obtained from the acid condensation of aniline and formaldehyde. Suitable grades commonly contain from 20 to 90 %, especially from 30 to 70 % of diphenylmethane diisocyanate isomers. If desired, at least a part of the polymeric MDI may be employed in the form of a prepolymer. Other suitable liquid MDI compositions include the well known MDI variants, for example uretonimine-modified MDI and MDI prepolymers.

The oxyalkylation product of ethylene diamine is preferably obtained by reacting the diamine with ethylene oxide and/or propylene oxide. Products obtained by reacting the diamine first with propylene oxide and then with ethylene oxide are particularly suitable. The total formulation will normally contain from about 3 % to about 25 % by weight of this component, smaller amounts being used in the production of flexible foams and larger amounts for rigid foams.

The polyoxyalkylene triol suitably contains both oxypropylene and oxyethylene residues, the latter being either randomly distributed in the polyether chains or present as end blocks. In general, oxyethylene contents up to about 20 % on a weight basis are preferred.

The polyethylene glycol monoalkyl ether is preferably a $C_{1-4}$ alkyl ether, for example a methyl ether, having a molecular weight of from 400 to 800. For the production of rigid and/or higher index foams, it is preferred to use this component in an amount of at least 12 times the weight of water used. The polyethylene glycol monoalkyl ether may contain up to 50 % of propylene oxide residues on a weight bases.

The isocyanate indices mentioned herein indicate the amount of isocyanate to be used relative to the total isocyanate-reactive groups present in the formulation, an isocyanate index of 100 indicating equivalence between the isocyanate groups and the isocyanate-reactive groups.

The foams may be prepared using conventional techniques. Thus, one-shot methods may be used or, if desired, the polyisocyanate may be prepolymerised by reaction with the polyols or part of the polyethylene glycol monoalkyl ether.

Other polyols having hydroxyl numbers of from 800 to 1850 may optionally be included in the reaction mixture, those having the higher hydroxyl numbers such as glycerol or triethanolamine being useful in the production of rigid foams.

The foam formulation may also contain other conventional ingredients of such formulations, for example tertiary amine catalysts and surfactants of the siloxane-oxyalkylene copolymer type, especially the alkoxy terminated copolymers. As a further embodiment of the present invention, there is provided a polyol composition useful in the production of open-celled hydrophilic polyurethane foam, said composition comprising :

1) an oxyalkylation product of ethylene diamine having a hydroxyl number of from 600 to 850;

2) a polyoxyalkylene triol having a hydroxyl number of from 28 to 56, and

3) a polyethylene glycol monoalkyl ether having a molecular weight of from 300 to 1000.

As a still further embodiment of the invention, there is provided a two-pack system useful in the production of open-celled hydrophilic polyurethane foam, said system comprising :

(A) a polyol composition containing :

1) an oxyalkylation product of ethylene diamine having a hydroxyl number of from 600 to 850;

2) a polyoxyalkylene triol having a hydroxyl number of from 28 to 56, and

3) a polyethylene glycol monoalkyl ether having a molecular weight of from 300 to 1000, and

(B) a polyisocyanate composition containing liquid MDI.

The foams obtained by the method of the invention are useful as plant support media, for example for plant cuttings or for cut flowers.

The invention is illustrated but not limited by the following Examples in which parts and percentages are by weight.

Example

Flexible and rigid foams were made from the following formulations :

|  | Flexible | Rigid |
|---|---|---|
| Polyol 1 | 7.5 | - |
| Polyol 2 | - | 7.5 |
| Polyol 3 | 5.5 | 9.5 |
| Glycerol | - | 5.5 |
| Methoxy PEG 750 | 28.0 | 12.5 |
| Silicone surfactant | 1.5 | 2.0 |
| Water | 6.5 | 1.0 |
| Trichlorofluoromethane | 14.0 | 17.0 |
| Polyisocyanate | 38.0 | 45.0 |
| Index | 32 | 70 |

The components identified in the table have the following compositions :

Polyol 1 is a polyether triol having a hydroxyl number of 48 containing 90 % propylene oxide and 10 % ethylene oxide residues, the latter being randomly distributed at the ends of the polyether chains.

Polyol 2 is a polyether triol having a hydroxyl number of 36 obtained by reacting glycerol with propylene oxide, then a propylene oxide/ethylene oxide mixture and finally with ethylene oxide, the total ethylene oxide content being 10 %. Polyol 3 is a reaction product of ethylene diamine with 3 moles of propylene oxide and 1 mole of ethylene oxide and has a hydroxyl number of 800.

Methoxy PEG 750 is the methyl ether of polyethylene glycol, molecular weight 750.

The polyisocyanate is a reaction product of crude MDI with approximately 3 %, based on the MDI, of methoxy PEG 750.

**Claims**

1. A method for the preparation of open-celled hydrophilic polyurethane foam which comprises reacting a liquid MDI composition with a polyol component comprising :

1) an oxyalkylation product of ethylene diamine having a hydroxyl number of from 600 to 850;

2) a polyoxyalkylene triol having a hydroxyl number of from 28 to 56, and

3) a polyethylene glycol monoalkyl ether having a molecular weight of from 300 to 1000, and a blowing agent comprising water and optionally a low boiling point halogenated hydrocarbon, the weight of polyethylene glycol monoalkyl ether being at least four times the weight of water and the isocyanate index being in the range from 25 to 90.

2. A method according to claim 1 wherein the oxyalkylation product of ethylene diamine constitutes from about 3 % to about 25 % of the weight of the total foam formulation.

3. A method according to claim 1 or claim 2 wherein the polyoxyalkylene triol contains both oxypropylene and oxyethylene residues and has an oxyethylene content of up to 20 % on a weight basis.

4. A method according to any of the preceding claims wherein the polyethylene glycol monoalkyl ether is a methyl ether.

5. A method according to any of the preceding claims wherein the foam formulation also contains a polyol having a hydroxyl number of from 800 to 1850.

6. A polyol composition useful in the method of claim 1 comprising :
   1) an oxyalkylation product of ethylene diamine having a hydroxyl number of from 600 to 850;
   2) a polyoxyalkylene triol having a hydroxyl number of from 28 to 56, and
   3) a polyethylene glycol monoalkyl ether having a molecular weight of from 300 to 1000.

7. A two-pack system useful in the method of claim 1 comprising :
   (A) a polyol composition containing :
1) an oxyalkylation product of ethylene diamine having a hydroxyl number of from 600 to 850;
2) a polyoxyalkylene triol having a hydroxyl number of from 28 to 56, and
3) a polyethylene glycol monoalkyl ether having a molecular weight of from 300 to 1000, and
   (B) a polyisocyanate composition containing liquid MDI.

8. A plant support medium comprising an open-celled hydrophilic polyurethane foam obtainable by the method of claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | CHEMICAL ABSTRACTS, vol. 106, no. 2, January 1987, page 39, abstract no. 6005j, Columbus, Ohio, US; & JP-A-61 151 222 (MITSUI TOATSU CHEMICALS, INC.) 09-07-1986 * Abstract * | 1 | C 08 G 18/28 C 08 G 18/66 C 08 G 18/14 |
| A | GB-A-1 133 691 (THE UPJOHN CO.) * Claims 1-3,7; page 3, lines 3-101; page 4, lines 12-21 * | 1 | |
| A | FR-A-1 247 044 (KUHLMANN) * Abstract, point 1; page 3, right-hand column, paragraphs 2-3; example 5 * | 1 | |
| A | FR-A-1 466 352 (ELEKAL) * Abstract, points I,IIa-IId * | 1 | |

TECHNICAL FIELDS SEARCHED (Int. Cl.4)

C 08 G

The present search report has been drawn up for all claims

| Place of search | Date of completion of the search | Examiner |
|---|---|---|
| THE HAGUE | 04-08-1989 | VAN PUYMBROECK M.A. |